# EUROPÄISCHE PATENTSCHRIFT

(11) **EP 3 754 834 B1**
(45) Veröffentlichungstag und Bekanntmachung des Hinweises auf die Patenterteilung: **22.09.2021**
(21) Anmeldenummer: 20178871.8
(22) Anmeldetag: 09.06.2020
(51) Int. Cl.: H02N 2/02, H02N 2/04, H02N 2/06, H02N 2/10

(54) **ANTRIEBSVORRICHTUNG UND -VERFAHREN ZUR LINEAREN ODER ROTATORISCHEN POSITIONIERUNG**
DRIVING DEVICE AND METHOD FOR LINEAR OR ROTARY POSITIONING
DISPOSITIF D'ENTRAÎNEMENT ET PROCÉDÉ POUR POSITIONNEMENT LINÉAIRE OU ROTATIF

(30) Priorität: 11.06.2019 DE 102019115790
(43) Veröffentlichungstag der Anmeldung: 23.12.2020
(73) Patentinhaber: Picofine GmbH, 26135 Oldenburg (DE)
(72) Erfinder: Kortschack, Axel, 26123 Oldenburg (DE); Schäfer-Nolte, Eike Oliver, 28197 Bremen (DE)
(74) Vertreter: Eisenführ Speiser

(56) Entgegenhaltungen:
- WO-A1-2012/123251
- CN-B- 106 998 156
- DE-B4-102016 213 596
- US-A1- 2003 015 940
- US-B1- 6 188 161

## Beschreibung

Die vorliegende Erfindung betrifft das Gebiet der linearen oder rotatorischen Positioniervorrichtungen und entsprechenden Positionierverfahren.

Es ist bekannt, Trägheitsantriebe, z.B. piezoelektrische und elektrostriktive Slip-Stick-Antriebe mit elektrischen Signalen (Ansteuerimpulsfolge) zu versorgen, welche nach Art einer Sägezahnspannung eine flache sowie eine steile Flanke besitzen. Beim Anliegen der flachen Flanke an einen Aktor eines solchen Slip-Stick-Antriebs nimmt der am Aktor fixierte Reibkörper den sogenannten Läufer mit. Diese Phase wird als Haft-Phase bezeichnet. Ist die steile Flanke aktiv, kommt es zu einem Durchrutschen zwischen Reibkörper und Läufer. Diese Phase wird als Slip-Phase bezeichnet. Bei der nächsten flachen Flanke der Impulsfolge wird wiederum der Reibköper in die Lage versetzt, den Läufer bewegungsmäßig mitzunehmen. Aus EP 2 678 935 B1 ist bekannt, dass die Form von einer Sägezahnkurve abweichen kann.

Es hat sich gezeigt, dass das erzwungene Durchrutschen zwischen Reibkörper und Läufer während der Slip-Phase nicht vollständig gelingt. So wird der Läufer stets von einer Sollbewegung abgebracht. Dies tritt insbesondere dann auf, wenn die gewünschte Geschwindigkeit des Läufers während der Slip-Phase abgebremst wird, oder wenn der Läufer sogar ein Stück in die Richtung der Bewegung des Reibkörpers mitgenommen wird. In diesem Zusammenhang wird von Backlash gesprochen. Die Höhe des Einflusses ist u.a. abhängig von der Kraft des Aktors, der Beschleunigung der Reibfläche, der Geschwindigkeit des Läufers zu Beginn der Slip-Phase, der Masse des Läufers sowie Elastizitäten im Material und äußeren Kräften.

Dieser Einfluss auf den Läufer während der Slip-Phase ist sehr störend, da er z.B. keine wirklich gleichmäßige Bewegung erlaubt, sondern zu einer alternierenden Geschwindigkeit des Läufers führt. Der störende Einfluss limitiert auch, wie klein die an den Aktor angelegten Signale werden können, denn bei sehr geringen Amplituden des Sägezahnsignals kann die Rückwärtsbewegung bei der steilen Flanke sogar sehr viel größer als der resultierende, verbleibende Schritt selbst sein. Das hat zur Folge, dass eine Reduzierung der Schrittgröße zu einer Verstärkung unerwünschter Vibrationen des Antriebs führt, da die Vibrationsamplitude bei kleinen Schrittweiten nicht mehr von der Schrittweite selbst, sondern von der Weite des Backlash dominiert wird. Aufgrund dieser zunehmenden Vibrationen ist es also nicht zielführend, bei einer Annäherung an ein Objekt zunehmend kleine Schritte zu wählen.

Neben den oben beschriebenen Schwankungen aufgrund des Backlash erfahren die Komponenten des Trägheitsantriebs noch Vibrationen, die unterschieden werden nach Mikrovibrationen und Makrovibrationen.

Im Falle der Mikrovibrationen kommt es im Anschluss an die steile Flanke für eine kurze Zeit zu einem zum Teil sogar mehrfachen Wechsel zwischen Haftreibung und Gleitreibung, mit einer Frequenz, die bei der Eigenfrequenz der Piezo-Antriebseinheit liegt.

Sobald es zu einer dauerhaften Haftreibung kommt, erfolgt der Übergang von der Mikrovibration auf die Makrovibration, wobei dabei die Antriebseinheit ein gemeinsames Schwingen mit dem zu positionierenden Objektes mit einer Eigenfrequenz der Kombination von zumindest der Antriebseinheit mit dem Objekt aufweist.

Geschwindigkeitsvariationen, Mikrovibrationen und Makrovibrationen sind störend für eine hochpräzise Positionierung.

Um lokal mit besonders hoher Präzision zu positionieren, wird der Aktor während der Haft-phase durch das Anlegen einer sich allmählich ändernden Spannung langsam verformt, und so wird der Läufer entsprechend fein und vibrationsfrei mitbewegt. Dieser Modus wird häufig Feinpositioniermodus oder Scanmodus genannt. Der Läufer kann dabei mit einer sehr hohen Auflösung, in der Größenordnung der Auflösung des Aktors (häufig deutlich kleiner als ein Nanometer, manchmal sogar kleiner als ein Pikometer) positioniert werden. Jedoch ist der Arbeitsbereich, bzw. die Scanweite in diesem Modus in der Regel auf wenige Mikrometer beschränkt. Aufgrund des kleinen Arbeitsbereichs im Scanmodus können die beschriebenen Vibrationen noch immer störend sein, insbesondere wenn die Vibrationen und die Schrittweite in einer ähnlichen Größenordnung liegen. Wird z.B. über die Positioniereinheit ein Rasterkraftmikroskop-Cantilever mit Spitze an eine Oberfläche angenähert, so muss diese Spitze im Schrittmodus so nahe an die Oberfläche gebracht werden, dass die Scanweite reicht, mit der Spitze die Oberfläche zu erreichen. Wenn nun die Schrittweiten so klein gewählt werden, dass diese in der Größenordnung der Scanweite liegen, dann ist das Risiko sehr hoch, dass die Spitze aufgrund der Schritte in die Oberfläche stößt und nicht durch den Scanmodus kontrolliert an die Oberfläche gelangt.

Dem Stand der Technik entsprechend, wird in solchen Fällen versucht die Vibrationen auf ein Minimum zu reduzieren, wobei dabei auf Technologien zurückgegriffen wird, die in den Patentschriften EP 2 678 935 B1 und DE 10 2016 213 596 B4 beschrieben sind. Verbleiben trotzdem Vibrationen oder können die oben genannten Techniken zur Reduktion der Vibrationen nicht genutzt werden, so wird versucht, den Scanbereich zu erhöhen, z.B. indem der Aktor größer ausgelegt wird, so dass dieser mehr Hub hat. Nachteilig daran ist, dass der Aktor dann mehr Masse aufweist und im Falle eines piezoelektrischen oder elektrostriktiven Aktors eine entsprechende größere Kapazität aufweist, so dass das Treiben des Aktors schwerer wird und der Aktor nicht selten sogar noch größere Vibrationen des Antriebs erzeugt. Ein alternativer Ansatz besteht darin, den Hub des Aktors über Hebel zu vergrößern. Jedoch führt dies wiederum zu erhöhten Elastizitäten und Schwingungen in der Hebelstruktur, die sich auf den Läufer übertragen, so dass ein relativ hoher Aufwand betrieben werden muss, um eine vibrationsarme Positionierung zu erreichen.

Weitere derartige Aktoren können zum Beispiel der WO 2012/123251 A1 und der US 6 188 161 B1 entnommen werden. Ein Linearantrieb mit zwei auf einen Läufer wirkenden Aktoren bzw. Aktorgruppen geht z.B. aus der CN 106998156 B hervor.

Ein der vorliegenden Erfindung zugrundeliegendes Ziel ist es, die oben erläuterten Nachteile bzw. Probleme der bekannten Slip-Stick-Antriebskonzepte zu beseitigen oder zumindest zu verringern.

Erfindungsgemäß wird nach einem ersten Aspekt eine Antriebsvorrichtung zur nicht-resonanten linearen und/oder rotatorischen Positionierung eines Objekts vorgeschlagen, wie sie in Anspruch 1 definiert ist, nämlich mit einer Basis, einer ersten piezoelektrischen oder elektrostriktiven Aktorgruppe mit mindestens einem Aktor, einer zweiten piezoelektrischen oder elektrostriktiven Aktorgruppe mit mindestens einem Aktor, einem Läufer mit einem ersten Teil und einem zweiten Teil, die zumindest in einer Bewegungsrichtung zueinander beweglich ausgestaltet sind, wobei der zweite Teil des Läufers das zu positionierende Objekt ist oder mit dem zu positionierenden Objekt gekoppelt ist, und einer Steuerung für die Aktorgruppen, wobei die erste Aktorgruppe für eine Bewegung des ersten Teil des Läufers gegenüber der Basis ausgestaltet ist, wobei die zweite Aktorgruppe für eine Bewegung des zweiten Teils gegenüber dem ersten Teil des Läufers entlang der Bewegungsrichtung ausgestaltet ist, wobei eine der Aktorgruppen für eine Bewegung nach Art eines Trägheitsantriebs ausgestaltet ist und die andere der Aktorgruppen für eine direkte oder indirekte Koppelung ausgestaltet ist, wobei die Steuerung zur Erzeugung eines gemeinsamen elektrischen Steuersignals für die Aktorgruppen ausgestaltet ist, mit wenigstens einem Trägheitsantriebssignalteil mit Abschnitten mit unterschiedlichen Steigungen und einem quasistatischen Scansignalanteil.

Alternativ zur Steuerung kann die Antriebsvorrichtung auch mit einem gemeinsamen Steuersignalanschluss für die Aktorgruppen versehen sein, der zur Aufnahme des gemeinsamen Steuersignals für die Aktorgruppen von einer Steuerung (die selbst nicht Teil der Antriebsvorrichtung ist) ausgestaltet ist.

Erfindungsgemäß wird nach einem zweiten Aspekt ein Verfahren zur nicht-resonanten linearen und/oder rotatorischen Positionierung eines Objekts vorgeschlagen, wie es in Anspruch 9 definiert ist, nämlich mit einem Bereitstellen einer Basis, einer ersten piezoelektrischen oder elektrostriktiven Aktorgruppe mit mindestens einem Aktor, einer zweiten piezoelektrischen oder elektrostriktiven Aktorgruppe mit mindestens einem Aktor, und einem Läufer mit einem ersten Teil und einem zweiten Teil, die zumindest in einer Bewegungsrichtung zueinander beweglich ausgestaltet sind, wobei der zweite Teil des Läufers das zu positionierende Objekt ist oder mit dem zu positionierenden Objekt gekoppelt ist, einem Bewegen des ersten Teil des Läufers gegenüber der Basis durch die erste Aktorgruppe, und einem Bewegen des zweiten Teils gegenüber dem ersten Teil des Läufers entlang der Bewegungsrichtung durch die zweite Aktorgruppe, wobei das eine Bewegen nach Art eines Trägheitsantriebs erfolgt und das andere Bewegen über eine direkte oder indirekte Koppelung erfolgt, wobei das Verfahren ein Bereitstellen eines gemeinsamen elektrischen Steuersignals für die Aktorgruppen mit wenigstens einem Trägheitsantriebssignalteil mit Abschnitten mit unterschiedlichen Steigungen und einem quasistatischen Scansignalanteil umfasst.

Ein Vorteil, der mit dem Vorsehen eines gemeinsamen Steuersignals verbunden ist, findet sich im geringeren Aufwand für die Steuerelektronik, da nicht je Positionierer zwei Steuersignale erzeugt werden müssen. Hinzu kommt, dass etwa bei Anwendungen in einer Vakuumkammer weniger viele Kabel durch die Kammerwand geführt werden müssen, wobei auch ganz allgemein weniger Kabel oder Leitungen zu handhaben sind, was insbesondere bei komplexen Positioniersystemen vorteilhaft ist. Weiter kommt hinzu, dass das Vorsehen möglichst weniger Kabel vorteilhaft für eine Miniaturisierung möglich, da damit weniger Kabel in den jeweiligen Positionierern geführt werden müssen.

Es ist nicht notwendig, dass, wenn eine der Aktorgruppen eine piezoelektrische Aktorgruppe ist, auch die andere Aktorgruppe eine piezoelektrische Aktorgruppe ist, wobei dies auch umgekehrt gilt, also nicht beide Aktorgruppen elektrostriktive Aktorgruppen sein müssen. Es ist mit anderen Worten möglich, eine Aktorgruppe als piezoelektrische Aktorgruppe und die andere Aktorgruppe als elektrostriktive Aktorgruppe vorzusehen, wobei entsprechendes auch gilt, wenn mehr als zwei Aktorgruppen eingesetzt werden.

Die Erfindung kann für lineare und rotatorische Trägheits- oder Mehraktorantriebsvorrichtungen verwendet werden. Es sind auch Antriebsvorrichtungen mit mehr als einem Freiheitsgrad möglich.

Ziel kann es sein, entweder den Läufer, bzw. den zweiten Teil des Läufers, als solches zu bewegen oder einen anderen Gegenstand über die Positionierung des zweiten Teils des Läufers mit zu bewegen (hierbei ist dann die Bewegung bzw. Positionierung des zweiten Teils des Läufers Mittel zu einer Bewegung oder Positionierung des anderen Gegenstands).

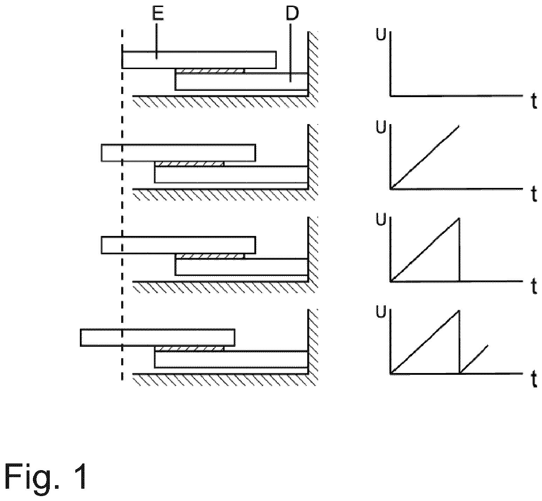

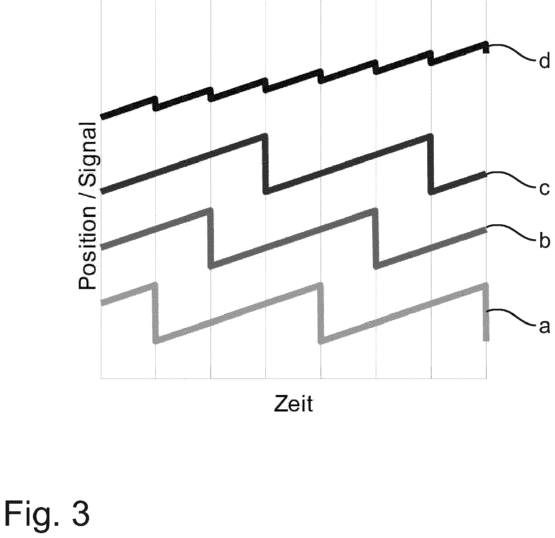

Der Trägheitsantriebssignalteil mit Abschnitten mit unterschiedlichen Steigungen kann in Form einer Sägezahnkurve vorgesehen sein, wie sie in Fig. 1 oder Fig. 3 gezeigt ist. Im Rahmen der Erfindung können allerdings auch von einer solchen Form abweichende Formen eingesetzt werden, wie Sie etwa aus EP 2 678 935 B1 bekannt sind.

Es ist insbesondere ein Verfahren zur linearen und/oder rotatorischen Positionierung eines Objekts vorgesehen, bei dem mindestens zwei piezoelektrische oder elektrostriktive Aktorgruppen eingesetzt werden, von denen eine erste Aktorgruppe einen ersten Läuferteil gegenüber einer stationären Basis der Antriebsvorrichtung entsprechend dem Prinzip eines Trägheitsantriebs bewegt und von denen die zweite Aktorgruppe einen zweiten Läuferteil relativ zum ersten Läuferteil mit einem begrenzten Bewegungsbereich im hochauflösenden Scanmodus bewegt wird, wobei die erste und zweite Aktorgruppe mit einem gemeinsamen elektrischen Steuersignal beaufschlagt sind.

Im Rahmen der Erfindung wird eine Antriebsvorrichtung zur Positionierung eines Objekts vorgeschlagen, in der zwei Aktorgruppen (jeweils bestehend aus einem oder mehreren Aktoren) zum Einsatz kommen. Eine erste Aktorgruppe arbeitet entsprechend der klassischen Technik eines Trägheitsantriebs (bzw. der Technik eines Mehraktorantriebs) um einen Läufer gegenüber einer stationären Basis anzutreiben, indem über diese Aktorgruppe in Reibkontakt stehende Reibflächen alternierend in Haft- und Gleitreibung gebracht werden. In den so zu bewegenden Läufer wird eine zweite Aktorgruppe integriert, die vorzugsweise über einen größeren Arbeitsbereich als die erste Aktorgruppe verfügt. Somit kann ein Teil des Läufers relativ zu dem von der ersten Aktorgruppe angetriebenen Teil des Läufers bewegt werden, indem die zweite Aktorgruppe durch das Anlegen einer sich allmählich ändernden Spannung langsam ausgelenkt wird. Das erlaubt einen großen Scanbereich (Feinpositionierbereich), ohne dass der Aktordes ursprünglichen Trägheitsantriebs vergrößert werden muss und ohne dass dessen Hub über Hebel vergrößert werden muss (wobei aber dennoch auch eine (zusätzliche) Hubvergrößerung per Hebel im Zusammenhang mit dem zweiten Aktorgruppe vorgesehen werden kann). Die erste und zweite Aktorgruppe werden mit einem gemeinsamen elektrischen Steuersignal beaufschlagt, über welches mit der ersten Aktorgruppe die Bewegung des Läufers gemäß eines Trägheitsantriebs erzeugt wird, sobald das Steuersignal eine geeignete Sägezahnspannung mit hinreichend steiler Flanke aufweist, so dass es zum Durchrutschen der Reibflächen kommt. Wenn keine entsprechende Sägezahnspannung an die Aktorgruppen angelegt wird, so verbleiben die Reibflächen in Haftreibung und die beiden Aktorgruppen folgen dem Profil der angelegten, veränderbaren Spannung. Die Antriebsvorrichtung bietet einen wesentlich größeren Scanbereich als ein entsprechender Trägheitsantrieb bzw. ein entsprechender Mehraktorantrieb.

In einer Abwandlung des obigen ist die zweite Aktorgruppe, also die Aktorgruppe, die die Scanbewegung realisiert, in die stationäre Basis integriert und die erste Aktorgruppe ist innerhalb des Läufers angeordnet, so dass der zweite Teil des Läufers relativ zum ersten Teil des Läufers gemäß dem Prinzip eines Trägheitsantriebs oder Mehraktorantrieb bewegt wird, abhängig davon, ob ein Trägheitsantrieb oder ein Mehraktorantrieb in den Läufer integriert wird.

In einer vorteilhaften Ausgestaltung eines Aspekts der Erfindung ist die Aktorgruppe, die für die Bewegung nach Art eines Trägheitsantriebs ausgestaltet ist, mit einem Hochpass zur teilweisen oder vollständigen Unterdrückung des quasistatischen Scansignalanteils versehen und/oder ist die koppelnde Aktorgruppe mit einem Tiefpass zur teilweisen oder vollständigen Unterdrückung des Trägheitsantriebssignalteils versehen.

In einer Ausführungsform geht die elektrische Versorgung der einen Aktorgruppe mit dem Spannungssignal der Steuerung durch einen elektrischer Tiefpass, z.B. in Form eines in Reihe geschalteten Widerstandes, so dass die steilen Flanken des Sägezahns nicht oder nicht vollständig an diese Aktorgruppe gelangen, während die andere Aktorgruppe die steilen Flanken in der Spannung erfährt und daraufhin jeweils derartig stark beschleunigt, dass es zum für den Trägheitsantrieb notwenigen Durchrutschen der Reibflächen kommt.

In einer anderen bzw. ergänzenden Ausführungsform ist in der Spannungsversorgung der anderen Aktorgruppe mit dem Steuersignal der Steuerung ein elektrischer Hochpassfilter vorgesehen, was dazu führt, dass diese Aktorgruppe zwar sich schnell ändernde Signaländerungen, wie z.B. die steilen Flanken der Sägezahnspannung, erfährt, aber keine langsamen Änderungen der Spannung, wie sie z.B. im Scanmodus auftreten.

In einer kombinierten Ausführungsform der erfindungsgemäßen Antriebsvorrichtung ist in der Versorgung der koppelnden Aktorgruppe mit dem Steuersignal ein elektrischer Tiefpass, z.B. in Form eines Widerstandes in der elektrischen Leitung, vorgesehen und in der Versorgung der Trägheitsantriebsaktorgruppe mit demselben Steuersignal der Steuerung ist ein elektrischer Hochpassfilter vorgesehen. In der Folge erfährt die zuletzt genannte Aktorgruppe lediglich die sich schnell ändernden Spannung und die andere Aktorgruppe lediglich die sich langsam ändernden Spannungssignale.

In einer anderen vorteilhaften Ausgestaltung eines Aspekts der Erfindung weist die Antriebsvorrichtung eine erste Führung zur Führung des Läufers gegenüber der Basis auf. In einer weiteren, hierzu ergänzenden oder alternativen Ausgestaltung des Aspekts, weist die Antriebsvorrichtung eine zweite Führung zur Führung des zweiten Teils des Läufers gegenüber dem ersten Teil des Läufers und/oder gegenüber der Basis auf.

In einer Ausführungsform der Erfindung wird der Läufer gegenüber einer stationären Basis geführt, so dass dieser in den frei beweglichen Freiheitsgraden eingeschränkt wird. Dabei kann es sich z.B. um ein Gleitlager, ein Wälzlager, ein magnetisches Lager, ein Luftlager und/oder Festkörpergelenke handeln. Alternativ oder ergänzend wird der zweite Teil des Läufers, welcher über die zweite Aktorgruppe relativ zum ersten Teil des Läufers bewegt wird, relativ zum ersten Teil des Läufers geführt, wobei es sich bei den Führungen z.B. um ein Festkörpergelenk, ein Luftlager, ein magnetisches Lager, ein Wälzlager oder Gleitlager handeln kann. Insbesondere bei der Verwendung eines Festkörpergelenks lassen sich über die zweite Aktorgruppe hochauflösende Bewegungen realisieren, ohne dass die Führung der Bewegung die Erzielung einer hohen Auflösung verhindert oder erschwert. Wiederum alternativ oder ergänzend kann vorgesehen sein, dass der zweite Teil des Läufers, welcher über die zweite Aktorgruppe relativ zum ersten Teil des Läufers bewegt wird, relativ zur stationären Basis der Antriebsvorrichtung geführt wird, wobei es sich bei den Führungen z.B. um ein Festkörpergelenk, ein Luftlager, ein magnetisches Lager, ein Wälzlager oder Gleitlager handeln kann, was insbesondere bei der Verwendung einer mechanischen Führung, wie z.B. einem Wälzlager, den Vorteil hat, dass die Antriebsvorrichtung robust gegenüber mechanischen Belastungen ist.

In einer anderen vorteilhaften Ausgestaltung eines Aspekts der Erfindung ist die Antriebsvorrichtung mit einem Mehraktorantrieb zur Bewegung des ersten Teils oder des zweiten Teils des Läufers ausgestattet, wobei die Aktorgruppe, die für eine Bewegung nach Art eines Trägheitsantriebs ausgestaltet ist, Teil des Mehraktorantriebs ist.

In einer solchen Ausführungsform wird der Läufer über ein Mehraktorantrieb angetrieben und mindestens eine der Aktorgruppen des Mehraktorantriebs wird gemeinsam mit der koppelnden Aktorgruppe über ein gemeinsames Steuersignal versorgt.

In einer anderen vorteilhaften Ausgestaltung eines Aspekts der Erfindung umfasst die Antriebsvorrichtung einen Positionssensor zur Bestimmung einer Position oder Bewegung des zweiten Teils des Läufers gegenüber der Basis.

Die Bewegung des zweiten Teils des Läufers der erfindungsgemäßen Antriebsvorrichtung kann durch den Einsatz von Wegsensoren erfasst werden. Dabei kann auf Sensoren zurückgegriffen werden, die z.B. in die stationäre Basis der Antriebsvorrichtung integriert sind und die Bewegung des Läufers, vorzugsweise den zweiten Teil des Läufers, erfassen. Typische Sensoren dafür sind z.B. optische, induktive, magnetische und kapazitive Encoder, Widerstandssensoren, Seilzugsensoren, etc. Besonders kompakte Laserinterferometer, wie in DE 10 2015 201 754 beschrieben, können ebenfalls in die Antriebsvorrichtung integriert werden. Alternativ zu den integrierten Sensoren können Sensoren auch außerhalb der Antriebsvorrichtung angeordnet werden und vorn dort die Relativbewegung des zweiten Teils des Läufers zur Basis der Antriebsvorrichtung erfassen. Typische Sensoren dafür können z.B. sein: Lasertringulatoren, Laserinterferometer und konfokale Wegmesssensoren.

In einer weiteren vorteilhaften Ausgestaltung eines erfindungsgemäßen Aspekts ist eine Hebelanordnung zur Übersetzung eines Hubs der koppelnden Aktorgruppe vorgesehen.

Der Hub der Aktorgruppe wird hierbei über eine Hebelvorrichtung vergrößert auf den gekoppelten Teil des Läufers übertragen. Dies erlaubt einen großen Feinpositionierbereich ohne dass die gesamte Antriebsvorrichtung bzw. die Akturgruppe entsprechend vergrößert werden müsste.

Bevorzugte und vorteilhafte Ausführungsformen der Erfindung sind insbesondere in den abhängigen Ansprüchen definiert, wobei zu verstehen ist, dass eine Ausführungsform, die im Zusammenhang mit einem erfindungsgemäßen Verfahren beschrieben ist, ebenso als Ausführungsform einer erfindungsgemäßen Vorrichtung zu verstehen ist, was auch umgekehrt gilt.

Im Folgenden wird die Erfindung anhand bevorzugter Ausführungsbeispiele unter Bezug auf die beiliegenden Figuren näher erläutert. Hierbei zeigt
- Fig. 1: eine Prinzipskizze eines bekannten Trägheitsantriebs mit typischer Sägezahnansteuerung,
- Fig. 2: eine schematische Illustration eines bekannten Mehraktorantriebs,
- Fig. 3: eine schematische Darstellung einer Ansteuerung eines bekannten Mehraktorantriebs und der resultierenden Bewegung,
- Fig. 4: eine schematische Darstellung eines ersten Ausführungsbeispiels einer erfindungsgemäßen Antriebsvorrichtung,
- Fig. 5: eine schematische Darstellung eines zweiten Ausführungsbeispiels einer erfindungsgemäßen Antriebsvorrichtung,
- Fig. 6: eine schematische Darstellung eines dritten Ausführungsbeispiels einer erfindungsgemäßen Antriebsvorrichtung,
- Fig.7: eine schematische Darstellung eines vierten Ausführungsbeispiels einer erfindungsgemäßen Antriebsvorrichtung,
- Fig.8: eine schematische Darstellung eines fünften Ausführungsbeispiels einer erfindungsgemäßen Antriebsvorrichtung,
- Fig. 9: eine schematische Darstellung eines sechsten, bevorzugten Ausführungsbeispiels einer erfindungsgemäßen Antriebsvorrichtung und
- Fig. 10: eine schematische Darstellung eines siebten Ausführungsbeispiels einer erfindungsgemäßen Antriebsvorrichtung und
- Fig. 11: ein schematisches Ablaufdiagramm eines Ausführungsbeispiels eines erfindungsgemäßen Antriebsverfahrens.

Fig. 1 zeigt eine Prinzipskizze eines bekannten Trägheitsantriebs mit typischer Sägezahnansteuerung.

Bei einem bekannten Trägheitsantrieb ist ein Aktor D vorgesehen, der typischerweise mit einem sägezahn-ähnlichen, periodischen Signal beaufschlagt wird und eine Beschleunigung relativ zu einem reibschlüssig mit dem Aktor verbundenen beweglich gelagerten Läufer E bewirkt. An der abfallenden Flanke der Aktorsignals zieht sich der Aktor D wieder zusammen, wobei infolge der Trägheit des Läufers E dieser dem Rückzug des Aktors D nicht folgt, so dass sich eine Relativverschiebung zwischen Aktor D und Läufer E ergibt.

Werden mehrere solcher Antriebe parallel zueinander eingesetzt, lassen sich einfach sogenannten Mehraktorantriebe aufbauen.

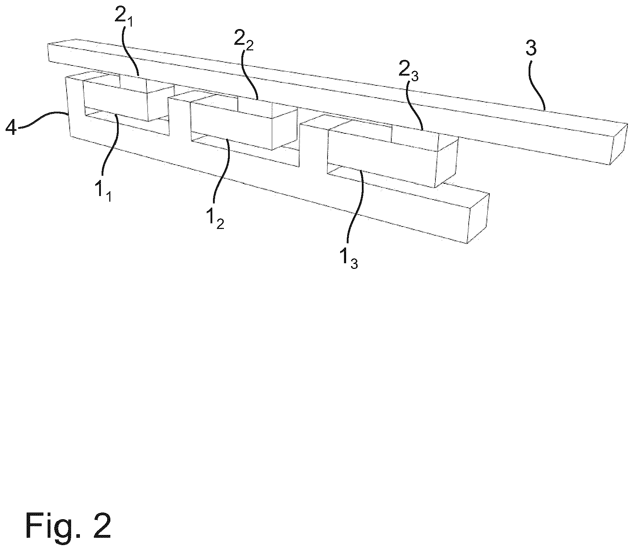

Fig. 2 zeigt eine schematische Illustration eines bekannten Mehraktorantriebs.

Ein bekannter Mehrantrieb weist mehrere Aktoren auf. In diesem Fall sind drei Aktoren 1₁, 1₂, 1₃ vorgesehen, wobei der Mehraktorantrieb aber im Grunde beliebig viele Aktoren aufweisen kann, die jeweils über ein Ansteuersignal individuell oder in Gruppen zu einem begrenzten Hub (im Falle von Piezoaktoren in der Regel bis zu einigen µm) angeregt werden können. Die Aktoren weisen jeweils eine Reibstelle 2₁, 2₂, 2₃ auf, die mit einem Läufer 3 in Reibkontakt stehen. Die Aktoren stehen jeweils mit einer Basis 4 in festen Kontakt.

Fig. 3 zeigt eine schematische Darstellung einer Ansteuerung eines bekannten Mehraktorantriebs, wie er in Fig. 2 gezeigt ist, und der resultierenden Bewegung. In Fig. 3 sind typische Spannungsverläufe a, b, c über die Zeit zur Ansteuerung der drei Aktoren dargestellt, wobei jeweils eine zeitversetzte Sägezahnansteuerung vorliegt. Hierbei ergibt sich die in Fig. 3 die daraus für den Läufer resultierende typische Bewegung d.

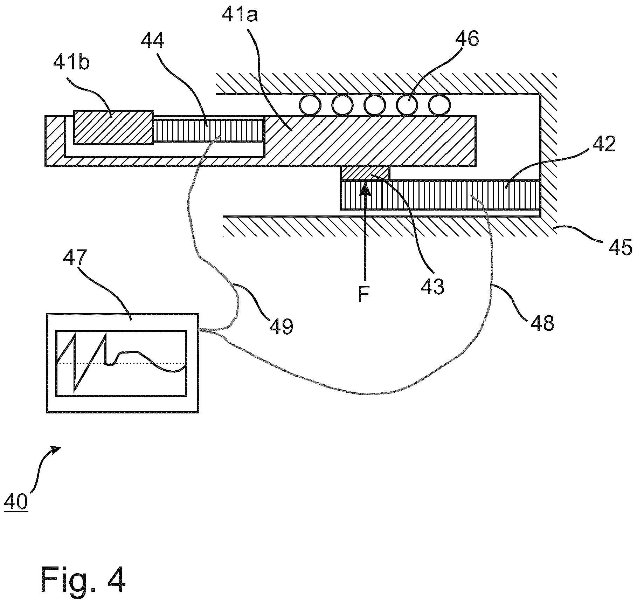

Fig. 4 zeigt eine schematische Darstellung eines ersten Ausführungsbeispiels einer erfindungsgemäßen Antriebsvorrichtung.

Die Antriebsvorrichtung 40 gemäß dem ersten Ausführungsbeispiel umfasst ein entsprechend dem Prinzip eines Trägheitsantriebs anzutreibenden ersten Teil eines Läufers 41a und eine Aktorgruppe 42, die über eine Reibfläche 43 in Reibkontakt mit dem ersten Teil des Läufer 41a steht. Über eine Kraft F wird die Reibfläche gegen den ersten Teil des Läufer 41a gepresst. Es ist von Vorteil, wenn auch nicht notwendig, wenn der erste Teil des Läufer 41a gegenüber einer stationären Basis 45 geführt wird, wobei in der Abbildung eine Kugellagerung 46 dargestellt ist. Ein zweiter Teil des Läufers 41b, steht mit einer zweiten Aktorgruppe 44 in Kontakt, welche an der gegenüberliegenden Seite mit dem ersten Teil des Läufers 41a in Kontakt steht. In diesem Ausführungsbeispiel hat die zweite Aktorgruppe 44 einen größeren Hub als die erste Aktorgruppe 42, wobei dies allerdings nur vorteilhaft, nicht aber notwendig ist (die Hübe können auch gleich sein und der Hub der zweiten Aktorgruppe 44 kann auch kleiner als der der ersten Aktorgruppe). Der zweite Teil des Läufers 41b kann über die zweite Aktorgruppe 44 relativ zum ersten Teil des Läufers 41a bewegt werden, wobei die Strecke auf den Aktorhub der zweiten Aktorgruppe 44 begrenzt ist. Die Aktorgruppen 42 und 44 werden von einem Steuerung 47 mit einem gemeinsamen Steuersignal beaufschlagt, welches über elektrische Leitungen 48 und 49 an die Aktorgruppen 42 und 44 geführt wird.

Auch wenn in der Fig. 4 eine lineare Antriebsvorrichtung gezeigt wurde, kann das Prinzip so auch für rotatorische Antriebsvorrichtungen genutzt werden.

Wenn in der Basis jeweils mehrere Aktorgruppen bzw. Antriebe parallel vorliegen, kann die Ansteuerung u.a. auch analog der obigen Darstellung (Fig. 2 und Fig. 3) zum Betrieb eines Mehraktorantriebs erfolgen.

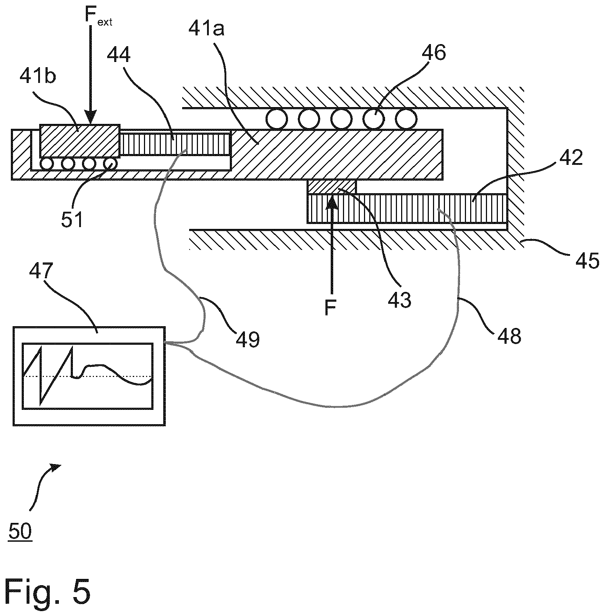

Fig. 5 zeigt eine schematische Darstellung eines zweiten Ausführungsbeispiels einer erfindungsgemäßen Antriebsvorrichtung 50. Dieses Ausführungsbeispiel ist nahezu identisch mit dem ersten Ausführungsbeispiel, mit dem Unterschied, dass der zweite Teil des Läufers 41b gegenüber dem ersten Teil des Läufers 41a geführt ist. In der Fig. 5 ist diese Führung 51 als Wälzlager dargestellt. Das hat den Vorteil, dass externe Kräfte Fₑₓₜ, die auf den zweiten Teil des Läufers 41b wirken, nicht die zweite Aktorgruppe 44 belasten, da diese Kräfte von der Führung 51 aufgenommen werden.

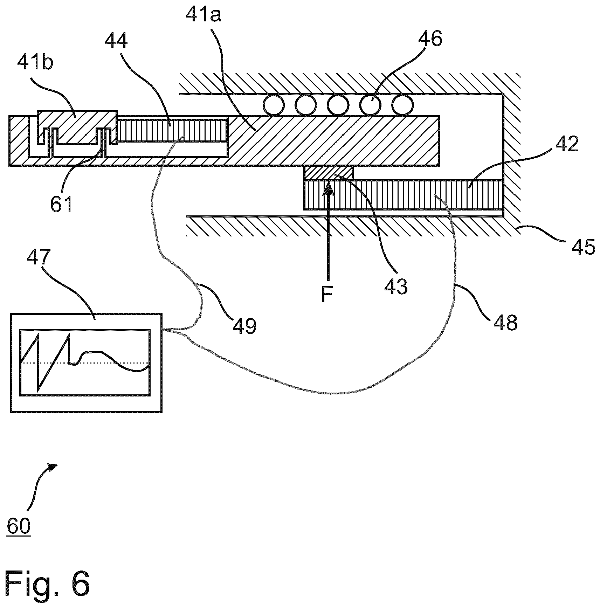

Fig. 6 zeigt eine schematische Darstellung eines dritten Ausführungsbeispiels einer erfindungsgemäßen Antriebsvorrichtung 60. Dieses Ausführungsbeispiel ist wiederum nahezu identisch mit dem zweiten Ausführungsbeispiel, mit dem Unterschied, dass die Führung zwischen dem ersten Teil des Läufers 41a und dem zweiten Teil des Läufers 41b als Festkörpergelenk 61 ausgeführt ist. Das hat den Vorteil, dass die Bewegung der Aktorgruppe 44 ungestört auf den zweiten Teil des Läufers 41b übertragen werden kann, so dass eine besonders hohe Bewegungsauflösung erzielt werden kann. Werden entsprechend Festkörper eingesetzt, ist es besonders einfach, den ersten und zweiten Teil des Läufers (41a und 41b) einteilig auszuführen, was die Fertigung vereinfacht.

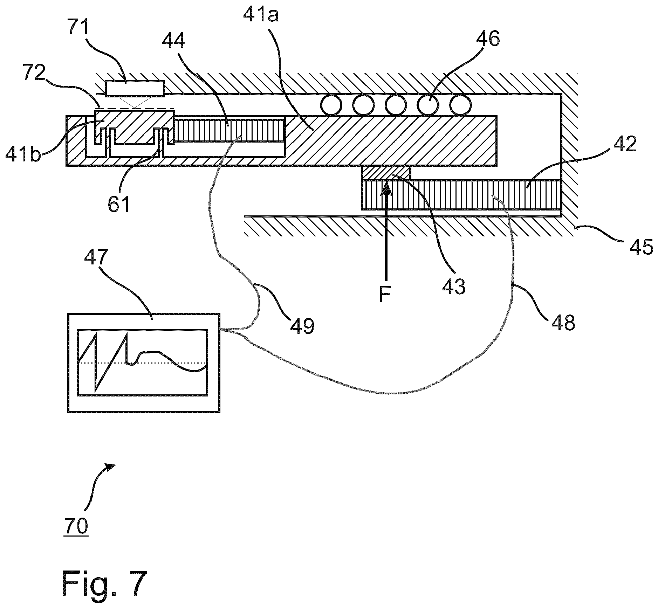

Fig. 7 zeigt eine schematische Darstellung eines vierten Ausführungsbeispiels einer erfindungsgemäßen Antriebsvorrichtung 70. Dieses Ausführungsbeispiel ist wiederum nahezu identisch mit dem dritten Ausführungsbeispiel, mit dem Unterschied, dass in die Basis 45 ein Sensor 71 integriert ist, der die Bewegung des zweiten Teils des Läufers 41b erfassen kann, z.B. indem ein Lineal 72 abgelesen wird. Je nachdem welche Art von Sensor eingesetzt wird, mag ein zusätzliches Medium zum Erfassen der Position, wie das Lineal 72 nicht nötig sein. Z.B. ein Interferometer mag in der Lage sein, die Positionsverschiebung des zweiten Teils des Läufers direkt zu erfassen.

Es sei bemerkt, dass die Modifikation des vierten Ausführungsbeispiels gegenüber dem dritten Ausführungsbeispiel entsprechend auch gegenüber dem ersten oder zweiten Ausführungsbeispiel vorgenommen werden kann.

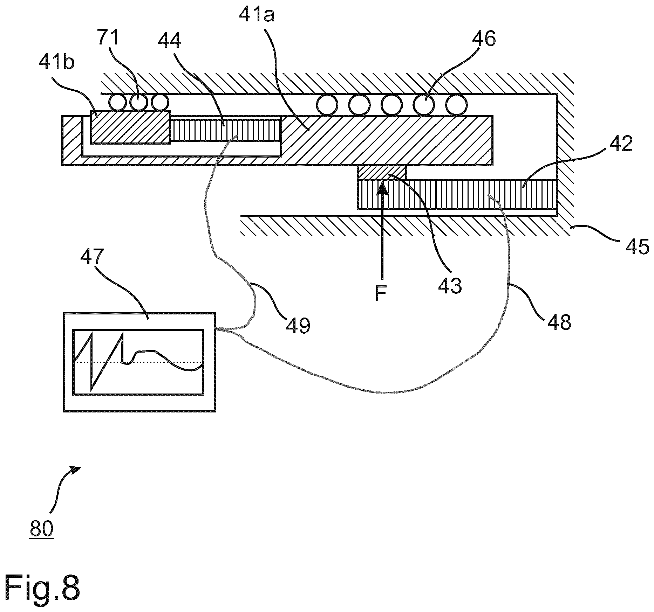

Fig. 8 zeigt eine schematische Darstellung eines fünften Ausführungsbeispiels einer erfindungsgemäßen Antriebsvorrichtung 80. Dieses Ausführungsbeispiel ist nahezu identisch mit dem ersten Ausführungsbeispiel, mit dem Unterschied, dass der zweite Teil des Läufers 41b gegenüber der Basis 45 gelagert ist, wobei in der Fig. 8 die Führung 71 als Wälzlager dargestellt ist, wobei selbstverständlich jede andere bekannte Art einer Führung eingesetzt werden kann. Wird der zweite Teil des Läufers 41b über eine Lagerung 71 geführt, dann muss der erste Teil des Läufers 41a nicht zwangsweise auch gegenüber der Basis 45 gelagert werden, wie in der Fig. 8 durch die Wälzführung 46 dargestellt.

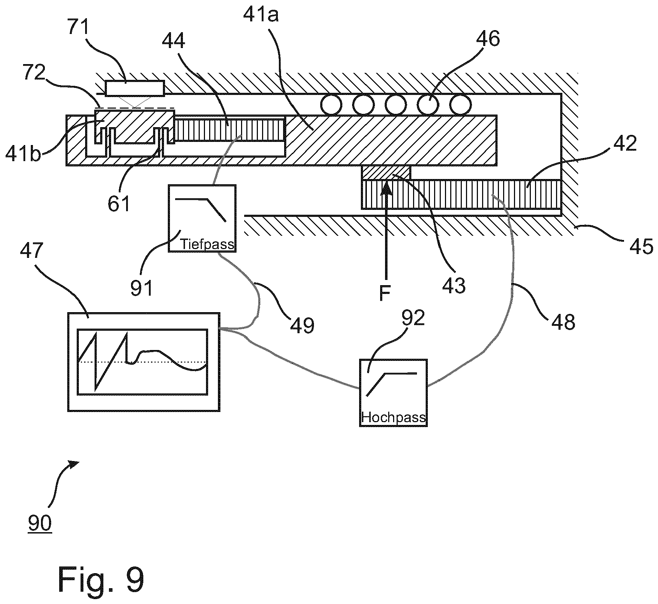

Fig. 9 zeigt eine schematische Darstellung eines sechsten, bevorzugten Ausführungsbeispiels einer erfindungsgemäßen Antriebsvorrichtung 90. Dieses Ausführungsbeispiel hat Ähnlichkeiten zum vierten Ausführungsbeispiel, mit dem Unterschied, dass in den elektrischen Leitungen 48, 49 zu den Aktorgruppen 42, 44 ein Tiefpassfilter 91 und ein Hochpassfilter 92 vorhanden sind. Der Hochpassfilter 92 in der Leitung 48 zur ersten Aktorgruppe 42 hat die Wirkung, dass sich langsam ändernde Spannungsniveaus, ausgegeben von der Steuerung 47, nicht, bzw. nicht vollständig an die erste Aktorgruppe 42 gelangen, so dass diese Aktorgruppe keine entsprechende Bewegung macht und somit auch nicht den ersten Teil des Läufers 41a bei langsam veränderlichen Signalen mitbewegt. Schnellveränderliche Signale werden jedoch an die erste Aktorgruppe 42 weitergeben, so dass diese Aktorgruppe den Läufer (41a + 41b) entsprechend dem Prinzip eines Trägheitsantriebs antreiben kann, wobei der Hochpassfilter 92 dabei so eingestellt ist, dass die langsamen Flanken der vorzugsweise genutzten Sägezahnspannung nicht weggefiltert werden. Der Tiefpassfilter 91 in der Leitung 49 zur zweiten Aktorgruppe 44 hat die Wirkung, dass schnell veränderliche Signale nicht an die Aktorgruppe 44 durchkommen. Somit erreichen die steilen Flanken der vorzugsweise genutzten Sägezahnspannung, die zur makroskopischen Bewegung des ersten Teils des Läufers 41a genutzt wird, nicht die zweite Aktorgruppe 44. Bei einem vorteilhaft eingestellten Tiefpassfilter 91 erreichen auch die langsamen Flanken des Sägezahns nicht die Aktorgruppe 44, sondern lediglich noch langsamer veränderliche Spannungen. Eine entsprechende Antriebsvorrichtung 90 kann makroskopisch gemäß dem Prinzip eines Trägheitsantriebs verfahren, wenn die Antriebseinheit mit einer Sägezahnspannung versorgt wird, und weist einen sehr großen Feinpositionierbereich (Scanbereich) aus, wenn die Spannungsänderungen entsprechend langsam sind. Es ist nicht nötig, dass sowohl Hoch- als auch Tiefpassfilter eingesetzt werden. So ist eine entsprechende Antriebsvorrichtung z.B. bereits sehr gut nutzbar, wenn lediglich der Tiefpassfilter 91 zum Einsatz kommt. Dann unterstützt die Aktorgruppe 42 den Feinpositionierbereich der Aktorgruppe 44. Das kann vorteilhaft sein, aber auch Nachteile mit sich bringen, wenn z.B. die Führung 46 Störungen einbringt.

Es ist klar, dass die obigen Angaben zum Hochpassfilter und/oder Tiefpassfilter auch entsprechend auf die anderen Ausführungsformen angewandt werden können, wenn die entsprechenden Elemente dort ebenfalls vorgesehen wären.

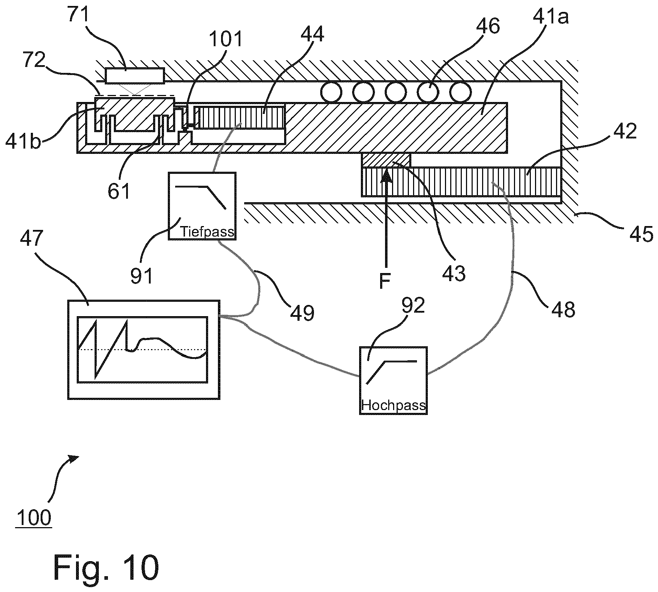

Fig. 10 zeigt eine schematische Darstellung eines siebten Ausführungsbeispiels einer erfindungsgemäßen Antriebsvorrichtung 100. Dieses Ausführungsbeispiel ist nahezu identisch mit dem sechsten Ausführungsbeispiel, jedoch wird der Hub der zweiten Aktorgruppe 44 über eine Hebelvorrichtung 101 vergrößert auf den zweiten Teil des Läufers 41b übertragen. Das kann vorteilhaft sein, insbesondere, wenn ein großer Feinpositionierbereich benötigt wird, aber die gesamte Antriebsvorrichtung klein bauen soll, so dass keine große Aktorgruppe 44 in die Antriebsvorrichtung 100 integriert werden kann.

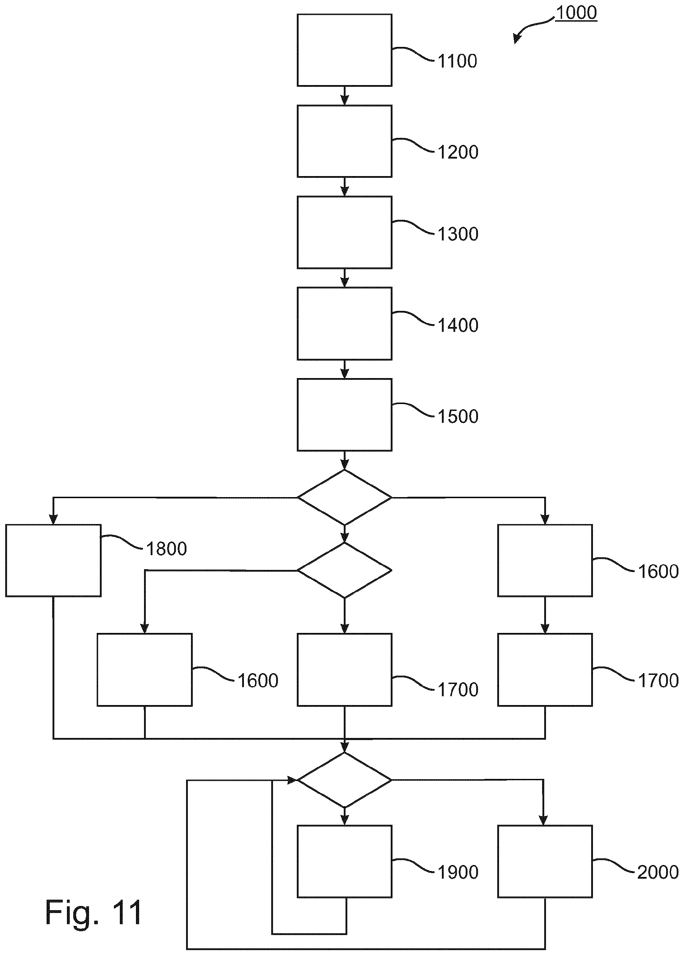

Fig. 11 zeigt ein schematisches Ablaufdiagramm eines Ausführungsbeispiels eines erfindungsgemäßen Antriebsverfahrens.

Das nicht-resonante Antriebsverfahren 1000 umfasst die Schritte:
- eines Anordnens 1100 einer ersten piezoelektrischen oder elektrostriktiven Aktorgruppe mit einer Reibfläche in einer stationären Basis, und
- eines Anpressens 1200 der Reibfläche an eine Fläche auf einem ersten Teil des Läufers, so dass diese Flächen in Reibkontakt stehen und so der erste Teil eines Läufers durch Ansteuerung der ersten Aktorgruppe mit mindestens einer Sägezahnspannung gemäß dem Prinzip eines Trägheitsantriebs oder eines Mehraktorantriebs angetrieben werden kann;
- eines Anordnens 1300 einer zweiten Aktorgruppe in dem ersten Teil des Läufers, und
- einer Verbindung 1400 der Aktorgruppe mit dem ersten und einem zweiten Teil des Läufers, welcher relativ zum ersten Teil beweglich ist, so dass die beiden Teile bei einer Auslenkung der zweiten Aktorgruppe gezielt relativ zueinander bewegt werden können;
- einer Verbindung 1500 eines gemeinsamen Steuersignals einer Steuerung mit der ersten und zweiten Aktorgruppe;
- einer Generierung 1900 einer kontinuierlichen Sägezahnspannung, oder einer anderen Signalform mit abwechselnder flacher und steiler Flanke, über die Steuerung, um den Läufer gemäß dem Prinzip eines Trägheitsantriebs makroskopisch zu verfahren, bis die erwünschte Distanz verfahren wurde, und auf den Feinpositioniermodus gewechselt werden kann
- einer Generierung 2000 einer langsam veränderlichen Spannung um damit den zweiten Teil des Läufers gegenüber dem ersten Teil des Läufers im Feinpositioniermodus hochauflösend zu bewegen, um eine Sollposition zu erreichen, wobei auf den Trägheitsantriebsmodus gewechselt wird, wenn die Sollposition außerhalb des zur Verfügung stehenden Feinpositionierbereichs liegt.

Auf das Verbinden 1500 des gemeinsamen Steuersignals können verschiedene Alternativen folgen, die der Generierung 1900 vorausgehen, nämlich
- eine Einbringung 1600 eines Hochpassfilters zwischen der Steuerung und der ersten Aktorgruppe, oder
- eine Einbringung 1700 eines Tiefpassfilters zwischen der Steuerung und der zweiten Aktorgruppe, oder
- eine Einbringung 1600 eines Hochpassfilters zwischen der Steuerung und der ersten Aktorgruppe und eine Einbringung 1700 eines Tiefpassfilters zwischen der Steuerung und der zweiten Aktorgruppe, oder
- ein Verzicht 1800 auf die Einbringung eines Hoch- oder Tiefpassfilters;
Auch wenn sich die oben diskutierten Ausführungsbeispiele jeweils auf eine lineare Bewegung des anzutreibenden Objektes beziehen, ist die Erfindung nicht auf eine solche lineare Bewegung beschränkt und eine rotatorische Bewegung sowie zusammengesetzte Bewegungen und Positionierungen sind ebenfalls möglich. Bei einer rotatorischen Bewegung bzw. Positionierung erfolgt das Bewegen der Reibfläche tangential statt parallel.

Bevorzugt ist es, dass die anpressende Kraft F über eine einstellende Federstruktur festgelegt wird. Es ist möglich, dass die Wirkrichtung der zum Einsatz kommenden Federn durch eine mechanische Struktur umgelenkt wird.

Es ist ferner möglich, dass mehrere Aktoren parallel eingesetzt werden, so dass die Aktoren so angesteuert werden können, dass eine anzutreibende Fläche auch gemäß dem Prinzip des Mehraktorantriebs angesteuert werden kann.

Die vorliegende Erfindung wurde insbesondere in den Ausführungsbeispielen in der Weise beschrieben, dass die Antriebsvorrichtung als solche ortsfest ist, während das zu bewegende Objekt relativ zur Basis und damit auch absolut bewegt wird. Es muss jedoch verstanden werden, dass die Bewegung zwischen Basis und Objekt primär als die Relativbewegung zwischen diesen Elementen zu verstehen ist. Es ist ebenfalls möglich, dass die Bewegung zwischen Objekt und Basis sich als eine absolute Bewegung der Antriebsvorrichtung äußert, wobei dann das Objekt absolut gesehen ortsfest bleiben würde. Ebenso ist es möglich, dass die Relativbewegung zu einer jeweiligen Absolutbewegung von sowohl Basis als auch Objekt (in jeweils entgegengesetzter Richtung) führt.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

Gemäß einer Ausgestaltung der vorliegenden Erfindung ist eine Antriebsvorrichtung zur nicht-resonanten linearen und/oder rotatorischen Positionierung eines Objekts vorgesehen, mit mindestens zwei piezoelektrischen oder elektrostriktiven Aktorgruppen, bestehend aus jeweils mindestens einem Aktor, wobei eine erste Aktorgruppe einen Läufer gegenüber einer stationären Basis der Antriebsvorrichtung entsprechend dem Prinzip eines Trägheitsantriebs bewegt, indem über diese Aktorgruppe aneinandergepresste Reibflächen alternierend in Haftreibung und Gleitreibung gebracht werden, und wobei über die zweite Aktorgruppe ein zweiter Teil des Läufers relativ zur dem von der ersten Aktorgruppe angetriebenen ersten Läuferteil mit einem begrenzten Bewegungsbereich im Feinpositioniermodus (Scanmodus) bewegt wird, wobei die erste und zweite Aktorgruppe mit einem gemeinsamen elektrischen Steuersignal beaufschlagt sind, über welches mit der ersten Aktorgruppe die Bewegung des Läufers gemäß eines Trägheitsantriebs erzeugt wird, sobald das Steuersignal eine Sägezahnspannung mit flacher und steiler Flanke aufweist, dessen steile Flanke den Aktor derart stark beschleunigt, dass es zum Durchrutschen der in Kontakt stehende Reibflächen kommt, und wobei das Steuersignal, während keine Sägezahnkurve angelegt wird, eine quasistatische bzw. langsam veränderliche Spannung aufweist, um mindestens eine Aktorgruppe zu bewegen ohne dass es zum Durchrutschen einer Reibfläche kommt.

Hierbei kann insbesondere vorgesehen sein, dass vor oder nach der zweiten Aktorgruppe ein elektrischer Tiefpass, z.B. in Form eines elektrischen Widerstands, vorhanden ist, so dass schnell veränderliche Signaländerungen nicht oder nur unvollständig an die zweite Aktorgruppe gelangen.

Ferner kann alternativ oder ergänzend vorgesehen sein, dass zur ersten Aktorgruppe ein elektrischer Hochpassfilter vorhanden ist, so dass langsam veränderliche Signaländerungen nicht oder nur unvollständig an die erste Aktorgruppe gelangen.

Es kann vorgesehen sein, dass die Bewegung des zweiten Teils des Läufers gegenüber der stationären Basis über einen Positionssensor erfasst wird, wobei es sich dabei entweder um einen in der Antriebsvorrichtung integrierten Sensor, wie z.B. optische, induktive, magnetische und kapazitiven Encoder oder Interferometer, oder um einen externen Sensor, wie z.B. ein Laserinterferometer handeln kann.

Es kann vorgesehen sein, dass der Läufer gegenüber der stationären Basis der Antriebsvorrichtung über eine Führung, wie z.B. ein Gleitlager, ein Wälzlager, ein magnetisches Lager, ein Luftlager oder Festkörpergelenk, geführt wird.

Es kann vorgesehen sein, dass der zweite Teil des Läufers, welcher über die zweite Aktorgruppe relativ zum ersten Teil des Läufers bewegt wird, relativ zum ersten Teil des Läufers geführt wird, wobei es sich bei den Führungen z.B. um ein Festkörpergelenk, ein Luftlager, ein magnetisches Lager, ein Wälzlager oder Gleitlager handeln kann.

Es kann vorgesehen sein, dass der zweite Teil des Läufers, welcher über die zweite Aktorgruppe relativ zum ersten Teil des Läufers bewegt wird, relativ zur stationären Basis der Antriebsvorrichtung geführt wird, wobei es sich bei den Führungen z.B. um ein Festkörpergelenk, ein Luftlager, ein magnetisches Lager, ein Wälzlager oder Gleitlager handeln kann.

Es kann vorgesehen sein, dass der Läufer über einen Mehraktorantrieb angetrieben wird und mindestens eine der Aktorgruppen des Mehraktorantriebs gemeinsam mit der zweiten Aktorgruppe über ein Steuersignal versorgt wird.

Es kann vorgesehen sein, dass der Hub der zweiten Aktorgruppe über einen Hebel übersetzt wird, so dass eine größere Bewegung auf den zweiten Teil des Läufers übertragen wird als der Hub der zweiten Aktorgruppe.

Es kann vorgesehen sein, dass die zweite Aktorgruppe in der stationären Basis der Antriebsvorrichtung angeordnet ist und die erste Aktorgruppe, innerhalb des Läufers, dessen Komponenten relativ zueinander gemäß dem Prinzip eines Trägheitsantriebs oder Mehraktorantrieb bewegt werden.

Gemäß einer Ausgestaltung des vorliegenden Erfindung umfasst ein Verfahren zur nicht-resonanten linearen und/oder rotatorischen Positionierung eines Objekts ein Anordnen einer ersten piezoelektrischen oder elektrostriktiven Aktorgruppe mit einer Reibfläche in einer stationären Basis, und ein Anpressen der Reibfläche an eine Fläche auf einem ersten Teil des Läufers, so dass diese Flächen in Reibkontakt stehen und so der erste Teil eines Läufers durch Ansteuerung der ersten Aktorgruppe mit mindestens einer Sägezahnspannung gemäß dem Prinzip eines Trägheitsantriebs oder eines Mehraktorantriebs angetrieben werden kann; ein Anordnen einer zweiten Aktorgruppe in dem ersten Teil des Läufers, und eine Verbindung der Aktorgruppe mit dem ersten und einem zweiten Teil des Läufers, welcher relativ zum ersten Teil beweglich ist, so dass die beiden Teile bei einer Auslenkung der zweiten Aktorgruppe gezielt relativ zueinander bewegt werden können; eine Verbindung eines gemeinsamen Steuersignals einer Steuerung mit der ersten und zweiten Aktorgruppe; wahlweise eine Einbringung eines Hochpassfilters zwischen der Steuerung und der ersten Aktorgruppe und wahlweise eine Einbringung eines Tiefpassfilters zwischen der Steuerung und der zweiten Aktorgruppe; eine Generierung einer Sägezahnspannung, oder einer anderen Signalform mit abwechselnder steiler und flacher Flanke, über die Steuerung, um den Läufer gemäß dem Prinzip eines Trägheitsantriebs makroskopisch zu verfahren, und eine Generierung einer langsam veränderlichen Spannung um damit den zweiten Teil des Läufers gegenüber dem ersten Teil des Läufers im Feinpositioniermodus hochauflösend zu bewegen.

## Patentansprüche

1. Antriebsvorrichtung (40, 50, 60, 70, 80, 90, 100) zur nicht-resonanten linearen und/oder rotatorischen Positionierung eines Objekts (41b), mit:
einer Basis (45),
einer ersten piezoelektrischen oder elektrostriktiven Aktorgruppe (42) mit mindestens einem Aktor,
einer zweiten piezoelektrischen oder elektrostriktiven Aktorgruppe (44) mit mindestens einem Aktor,
einem Läufer (41a, 41b) mit einem ersten Teil (41a) und einem zweiten Teil (41b), die zumindest in einer Bewegungsrichtung zueinander beweglich ausgestaltet sind, wobei der zweite Teil (41b) des Läufers das zu positionierende Objekt (41b) ist oder mit dem zu positionierenden Objekt gekoppelt ist, und
einer Steuerung (47) für die Aktorgruppen (42, 44) oder einem Steuersignalanschluss,
wobei die erste Aktorgruppe (42) für eine Bewegung des ersten Teil (41a) des Läufers gegenüber der Basis (45) ausgestaltet ist,
wobei die zweite Aktorgruppe (44) für eine Bewegung des zweiten Teils (41b) gegenüber dem ersten Teil (41a) des Läufers entlang der Bewegungsrichtung ausgestaltet ist,
wobei eine der Aktorgruppen (42) für eine Bewegung nach Art eines Trägheitsantriebs ausgestaltet ist und die andere der Aktorgruppen (44) für eine direkte oder indirekte Koppelung ausgestaltet ist,
wobei die Steuerung (47) zur Erzeugung eines gemeinsamen elektrischen Steuersignals für die Aktorgruppen (42, 44) ausgestaltet ist, mit wenigstens einem Trägheitsantriebssignalteil mit Abschnitten mit unterschiedlichen Steigungen und einem quasistatischen Scansignalanteil oder das Steuersignalanschluss ein gemeinsamer Steuersignalanschluss für die Aktorgruppen (42, 44) und zur Aufnahme des gemeinsamen elektrischen Steuersignals für die Aktorgruppen (42, 44) ausgestaltet ist.

2. Antriebsvorrichtung (90, 100) nach Anspruch 1,
wobei die Aktorgruppe (42), die für die Bewegung nach Art eines Trägheitsantriebs ausgestaltet ist, mit einem Hochpass (92) zur teilweisen oder vollständigen Unterdrückung des quasistatischen Scansignalanteils versehen ist und/oder
wobei die koppelnde Aktorgruppe (44) mit einem Tiefpass (91) zur teilweisen oder vollständigen Unterdrückung des Trägheitsantriebssignalteils versehen ist.

3. Antriebsvorrichtung (70, 90, 100) nach einem der vorstehenden Ansprüche,
mit einem Positionssensor (71) zur Bestimmung einer Position oder Bewegung des zweiten Teils (41b) des Läufers gegenüber der Basis (45).

4. Antriebsvorrichtung (40, 50, 60, 70, 80, 90, 100) nach einem der vorstehenden Ansprüche,
mit einer ersten Führung (46) zur Führung des Läufers (41a) gegenüber der Basis (45).

5. Antriebsvorrichtung (50, 60, 70, 80, 90, 100) nach einem der vorstehenden Ansprüche,
mit einer zweiten Führung (51, 61, 71) zur Führung des zweiten Teils (41b) des Läufers gegenüber dem ersten Teil (41a) des Läufers und/oder gegenüber der Basis (45).

6. Antriebsvorrichtung (40, 50, 60, 70, 80, 90, 100) nach einem der vorstehenden Ansprüche,
wobei die Antriebsvorrichtung (40, 50, 60, 70, 80, 90, 100) mit einem Mehraktorantrieb zur Bewegung des ersten Teils (41a) oder des zweiten Teils (41b) des Läufers ausgestattet ist, wobei die Aktorgruppe (42), die für eine Bewegung nach Art eines Trägheitsantriebs ausgestaltet ist, Teil des Mehraktorantriebs ist.

7. Antriebsvorrichtung (100) nach einem der vorstehenden Ansprüche,
mit einer Hebelanordnung (101) zur Übersetzung eines Hubs der koppelnden Aktorgruppe (44).

8. Antriebsvorrichtung (40, 50, 60, 70, 80, 90, 100) nach einem der vorstehenden Ansprüche,
wobei die erste Aktorgruppe (42) für die Bewegung des ersten Teils (41a) des Läufers gegenüber der Basis (45) nach Art eines Trägheitsantriebs ausgestaltet ist und
wobei die zweite Aktorgruppe (44) den zweiten Teil (41b) des Läufers direkt oder indirekt mit dem ersten Teil (41a) des Läufers koppelt.

9. Antriebsverfahren (1000) zur nicht-resonanten linearen und/oder rotatorischen Positionierung eines Objekts (41b), mit
Bereitstellen einer Basis (45), einer ersten piezoelektrischen oder elektrostriktiven Aktorgruppe (42) mit mindestens einem Aktor, einer zweiten piezoelektrischen oder elektrostriktiven Aktorgruppe (44) mit mindestens einem Aktor, und einem Läufer (41a, 41b) mit einem ersten Teil (41a) und einem zweiten Teil (41b), die zumindest in einer Bewegungsrichtung zueinander beweglich ausgestaltet sind, wobei der zweite Teil (41b) des Läufers das zu positionierende Objekt (41b) ist oder mit dem zu positionierenden Objekt gekoppelt ist,
Bewegen (1900) des ersten Teil (41a) des Läufers gegenüber der Basis (45) durch die erste Aktorgruppe (42), und
Bewegen (2000) des zweiten Teils (41b) gegenüber dem ersten Teil (41a) des Läufers entlang der Bewegungsrichtung durch die zweite Aktorgruppe (44),
wobei das eine Bewegen (1900) nach Art eines Trägheitsantriebs erfolgt und das andere Bewegen (2000) über eine direkte oder indirekte Koppelung erfolgt,
wobei das Verfahren ein Bereitstellen (1500) eines gemeinsamen elektrischen Steuersignals für die Aktorgruppen (42, 44) mit wenigstens einem Trägheitsantriebssignalteil mit Abschnitten mit unterschiedlichen Steigungen und einem quasistatischen Scansignalanteil umfasst.

10. Antriebsverfahren (1000) nach Anspruch 9,
mit einem Hochpassfiltern des Steuersignals für die Aktorgruppe (42), die das Bewegen nach Art eines Trägheitsantriebs ausführt, zur teilweisen oder vollständigen Unterdrückung des quasistatischen Scansignalanteils, und/oder
mit einem Tiefpassfiltern des Steuersignals für die koppelnde Aktorgruppe (44) zur teilweisen oder vollständigen Unterdrückung des Trägheitsantriebssignalteils.

## Claims

1. A drive means (40, 50, 60, 70, 80, 90, 100) for non-resonant linear and/or rotary positioning of an object (41b), comprising:
a base (45),
a first piezoelectric or electrostrictive actuator group (42) having at least one at least one actuator,
a second piezoelectric or electrostrictive actuator group (44) having at least one actuator,
a runner (41a, 41b) having a first portion (41a) and a second portion (41b) which are designed to be movable toward one another in one direction of movement at least, wherein the second portion (41b) of the runner is the object (41b) to be positioned or is coupled to the object to be positioned, and
a control means (47) for the actuator groups (42, 44), or a control signal connection,
wherein the first actuator group (42) is designed for a movement of the first portion (41a) of the runner relative to the base (45),
wherein the second actuator group (44) is designed for a movement of the second portion (41b) relative to the first portion (41a) of the runner along the direction of movement,
wherein one of the actuator groups (42) is designed for a movement in the manner of an inertia drive and the other one of the actuator groups (44) is designed for direct or indirect coupling,
wherein the control means (47) is designed for generating a common electrical control signal for the actuator groups (42, 44), said signal having at least one inertia drive signal portion comprising sections with different gradients and a quasi-static scan signal portion, or the control signal connection is a common control signal connection for the actuator groups (42, 44) and is designed to receive the common electrical control signal for the actuator groups (42, 44).

2. The drive means (90, 100) according to claim 1,
wherein the actuator group (42) which is designed for movement in the manner of an inertia drive is provided with a high-pass filter (92) for partial or full suppression of the quasi-static scan signal portion and/or
wherein the coupling actuator group (44) is provided with a low-pass filter (91) for partial or full suppression of the inertia drive signal portion.

3. The drive means (70, 90, 100) according to any one of the preceding claims,
comprising a position sensor (71) for determining a position or movement of the second portion (41b) of the runner relative to the base (45).

4. The drive means (40, 50, 60, 70, 80, 90, 100) according to any one of the preceding claims,
comprising a first guide means (46) for guiding the runner (41a) relative to the base (45).

5. The drive means (50, 60, 70, 80, 90, 100) according to any one of the preceding claims,
comprising a second guide means (51, 61, 71) for guiding the second portion (41b) of the runner relative to the first portion (41a) of the runner and/or relative to the base (45).

6. The drive means (40, 50, 60, 70, 80, 90, 100) according to any one of the preceding claims,
wherein the drive means (40, 50, 60, 70, 80, 90, 100) is equipped with a multi-actuator drive for moving the first portion (41a) or the second portion (41b) of the runner, wherein the actuator group (42) designed for movement in the manner of an inertia drive is part of the multi-actuator drive.

7. The drive means (100) according to any one of the preceding claims,
comprising a lever mechanism (101) for transmitting a stroke of the coupling actuator group (44).

8. The drive means (40, 50, 60, 70, 80, 90, 100) according to any one of the preceding claims,
wherein the first actuator group (42) is designed for movement of the first portion (41a) of the runner relative to the base (45) in the manner of an inertia drive and
wherein the second actuator group (44) couples the second portion (41b) of the runner directly or indirectly with the first portion (41a) of the runner.

9. A drive method (1000) for non-resonant linear and/or rotary positioning of an object (41b), comprising the steps of:
providing a base (45), a first piezoelectric or electrostrictive actuator group (42) having at least one actuator, a second piezoelectric or electrostrictive actuator group (44) having at least one actuator, and a runner (41a, 41b) having a first portion (41a) and a second portion (41b) which are designed to be movable toward one another in one direction of movement at least, wherein the second portion (41b) of the runner is the object (41b) to be positioned or is coupled to the object to be positioned,
moving (1900) the first portion (41a) of the runner relative to the base (45) by means of the first actuator group (42), and
moving (2000) the second portion (41b) relative to the first portion (41a) of the runner along the direction of movement by means of the second actuator group (44),
wherein the one movement (1900) is performed in the manner of an inertia drive and the other movement (2000) is performed via a direct or indirect coupling,
wherein the method includes providing (1500) a common electrical control signal for the actuator groups (42, 44), said signal having at least one inertia drive signal portion comprising sections with different gradients and a quasi-static scan signal portion.

10. The drive method (1000) according to claim 9,
comprising the step of high-pass filtering of the control signal for the actuator group (42) which performs the movement in the manner of an inertia drive, for partial or full suppression of the quasi-static scan signal portion, and/or
the step of low-pass filtering of the control signal for the coupling actuator group (44) for partial or full suppression of the inertia drive signal portion.

## Revendications

1. Dispositif d'entraînement (40, 50, 60, 70, 80, 90, 100) pour le positionnement linéaire et/ou rotatif non résonant d'un objet (41b), avec :
une base (45),
un premier groupe d'actionneurs (42) piézoélectrique ou électrostrictif avec au moins un actionneur,
un second groupe d'actionneurs (44) piézoélectrique ou électrostrictif avec au moins un actionneur,
un rotor (41a, 41b) avec une première partie (41a) et une seconde partie (41b) qui sont conçues de manière mobile l'une par rapport à l'autre au moins dans un sens de déplacement, dans lequel la seconde partie (41b) du rotor est l'objet (41b) à positionner ou est couplée à l'objet à positionner, et
une commande (47) pour les groupes d'actionneurs (42, 44) ou un raccord de signal de commande,
dans lequel le premier groupe d'actionneurs (42) est conçu pour un déplacement de la première partie (41a) du rotor par rapport à la base (45),
dans lequel le second groupe d'actionneurs (44) est conçu pour un déplacement de la seconde partie (41b) du rotor par rapport à la première partie (41a) du rotor le long du sens de déplacement,
dans lequel un des groupes d'actionneurs (42) est conçu pour un déplacement à la manière d'un entraînement par inertie et l'autre des groupes d'actionneurs (44) est conçu pour un couplage direct ou indirect,
dans lequel la commande (47) est conçue pour la génération d'un signal de commande électrique commun pour les groupes d'actionneurs (42, 44), avec au moins une part de signal d'entraînement par inertie avec des sections avec différentes pentes et une part de signal de balayage quasi-statique ou le raccord de signal de commande est un raccord de signal de commande commun pour les groupes d'actionneurs (42, 44) et est conçue pour la réception du signal de commande électrique commun pour les groupes d'actionneurs (42, 44).

2. Dispositif d'entraînement (90, 100) selon la revendication 1,
dans lequel le groupe d'actionneurs (42) qui est conçu pour le déplacement à la manière d'un entraînement par inertie, est pourvu d'un filtre passe-haut (92) pour la suppression partielle ou complète de la part de signal de balayage quasi-statique et/ou
dans lequel le groupe d'actionneurs (44) de couplage est pourvu d'un filtre passe-bas (91) pour la suppression partielle ou complète de la part de signal d'entraînement par inertie.

3. Dispositif d'entraînement (70, 90, 100) selon l'une des revendications précédentes,
avec un capteur de position (71) pour la détermination d'une position ou d'un déplacement de la seconde partie (41b) du rotor par rapport à la base (45).

4. Dispositif d'entraînement (40, 50, 60, 70, 80, 90, 100) selon l'une des revendications précédentes,
avec un premier guidage (46) pour le guidage du rotor (41a) par rapport à la base (45).

5. Dispositif d'entraînement (50, 60, 70, 80, 90, 100) selon l'une des revendications précédentes,
avec un second guidage (51, 61, 71) pour le guidage de la seconde partie (41b) du rotor par rapport à la première partie (41a) du rotor et/ou par rapport à la base (45).

6. Dispositif d'entraînement (40, 50, 60, 70, 80, 90, 100) selon l'une des revendications précédentes, dans lequel le dispositif d'entraînement (40, 50, 60, 70, 80, 90, 100) est conçu avec un entraînement à plusieurs actionneurs pour le déplacement de la première partie (41a) ou de la seconde partie (41b) du rotor, dans lequel le groupe d'actionneurs (42) qui est conçu pour un déplacement à la manière d'un entraînement par inertie, fait partie de l'entraînement à plusieurs actionneurs.

7. Dispositif d'entraînement (100) selon l'une des revendications précédentes,
avec un agencement de levier (101) pour la transmission d'une course du groupe d'actionneurs (44) de couplage.

8. Dispositif d'entraînement (40, 50, 60, 70, 80, 90, 100) selon l'une des revendications précédentes,
dans lequel le premier groupe d'actionneurs (42) est conçu pour le déplacement de la première partie (41a) du rotor par rapport à la base (45) à la manière d'un entraînement par inertie et
dans lequel le second groupe d'actionneurs (44) couple la seconde partie (41b) du rotor directement ou indirectement à la première partie (41a) du rotor.

9. Procédé d'entraînement (1000) pour le positionnement linéaire et/ou rotatif non résonant d'un objet (41b), avec
la fourniture d'une base (45), d'un premier groupe d'actionneurs (42) piézoélectrique ou électrostrictif avec au moins un actionneur, un second groupe d'actionneurs (44) piézoélectrique ou électrostrictif avec au moins un actionneur, et un rotor (41a, 41b) avec une première partie (41a) et une seconde partie (41b) qui sont conçues de manière mobile l'une par rapport à l'autre au moins dans un sens de déplacement, dans lequel la seconde partie (41b) du rotor est l'objet à positionner (41b) ou est couplée à l'objet à positionner,
le déplacement (1900) de la première partie (41a) du rotor par rapport à la base (45) par le premier groupe d'actionneurs (42), et
le déplacement (2000) de la seconde partie (41b) par rapport à la première partie (41a) du rotor le long du sens de déplacement par le second groupe d'actionneurs (44),
dans lequel l'un déplacement (1900) est effectué à la manière d'un entraînement par inertie et l'autre déplacement (2000) est effectué par le biais d'un couplage direct ou indirect,
dans lequel le procédé comporte une fourniture (1500) d'un signal de commande électrique commun pour les groupes d'actionneurs (42, 44) avec au moins une part de signal d'entraînement par inertie avec des sections avec différentes pentes et une part de signal de balayage quasi-statique.

10. Procédé d'entraînement (1000) selon la revendication 9,
avec un filtrage passe-haut du signal de commande pour le groupe d'actionneurs (42) qui réalise le déplacement à la manière d'un entraînement par inertie, pour la suppression partielle ou complète de la part de signal de balayage quasi-statique, et/ou
avec un filtrage passe-bas du signal de commande pour le groupe d'actionneurs (4) de couplage pour la suppression partielle ou complète de la part de signal d'entraînement par inertie.
